# EUROPÄISCHE PATENTSCHRIFT

(11) **EP 0 786 417 B1**
(45) Veröffentlichungstag und Bekanntmachung des Hinweises auf die Patenterteilung: **26.06.2002**
(21) Anmeldenummer: 97100729.9
(22) Anmeldetag: 17.01.1997
(51) Int. Cl.: B65D 35/02, B29C 49/00, B29C 65/00, B65D 41/04

(54) **Kunststofftube mit einem Tubenkörper, sowie Verfahren zu deren Herstellung**
Plastic tube presenting a tube body and method of making it
Tube en plastique présentant un corps de tube et procédé pour sa fabrication

(30) Priorität: 23.01.1996 DE 19602258
(43) Veröffentlichungstag der Anmeldung: 30.07.1997
(73) Patentinhaber: CEBAL Verpackungen GmbH, 90441 Nürnberg (DE)
(72) Erfinder: Dujardin, Francois, 95290 L'Isle Adam (FR); Fröhling, Richard, 96110 Schesslitz (DE)
(74) Vertreter: Meissner, Bolte & Partner

(56) Entgegenhaltungen:
- AU-B- 567 216
- US-A- 3 465 917

## Beschreibung

Die Erfindung betrifft zunächst eine Kunststofftube mit einem schlauchförmigen Tubenkörper, welcher über eine Schulter in einen Außengewindehals übergeht, und mit einem Schraubverschluß, der mit einem Innengewinde auf das Gewinde des Außengewindehalses aufschraubbar ist, wobei die Schulter an das zugehörige Ende des Tubenkörpers angespritzt ist und wobei die Schulter mit dem Außengewindehals einstückig ist (Oberbegriff des Anspruches 1). Eine Kunststofftube dieser Art ist aus US 3,465,917 A bekannt.

Die DE-PS 41 00 B94 offenbart eine Kunststofftube mit einem schlauchförmigen Tubenkörper, welcher über eine Schulter in einen Außengewindehals übergeht, und mit einem Schraubverschluß, der mit einem Innengewinde auf das Gewinde des Außengewindehalses aufschraubbar ist. Zusätzlich zu der Verschraubung des Verschlusses mit dem Außengewindehals sind noch eine perforierbare Membran am Hals und ein zugehöriges Perforationselement, z.B. ein Kegelstumpf, am Schraubverschluß vorgesehen, die aber hier ohne Interesse sind.

Zusätzlich zu der dadurch bedingten relativ komplizierten Bauweise dieser Tube sind ferner nachteiligerweise Tubenkörper und Außengewindehals in einem Stück und damit aus demselben Kunststoff hergestellt.

Aus DE-OS 41 00 757 ist eine im Querschnitt viereckige, im Blasformverfahren hergestellte Kunststofftube bekannt, wobei der Tubenkörper ebenfalls in den Tubenhals übergeht. Hiermit ist eine in Längsrichtung der Tube aufzudrückende Verschlußkappe durch Verrasten verbindbar. Ein weiterer Nachteil liegt darin, daß diese Tube von der späteren Abgabeseite her zu füllen ist. Dies ist relativ umständlich und damit zeitraubend. Auch besteht die Gefahr, daß nach dem Abfüllen Luftblasen im Tubeninnern verbleiben.

Aus PCT/EP 91/02164 kennt man einen zusammenlegbaren Behälter für pastöse Produkte, der eine tubenähnliche Form hat. Der Körper dieses Behälters ist im nicht zusammengeklappten Zustand im Querschnitt viereckig. Zwei sich gegenüberliegende Seitenwände sind harmonikaartig zusammenfaltbar. In der Längsrichtung dieses Behälters betrachtet ist ein Ende fest abgeschlossen, während das andere Ende eine Düse aufweist, die durch eine Schraubkappe abschließbar ist. Auch hier sind der Körper des Behälters und der die Düse tragende Teil aus einem Stück hergestellt.

Sowohl bei DE-OS 41 00 757 als auch bei PCT/EP 91/02164 sind die sich jeweils gegenüberliegenden Seitenflächen des Tubenkörpers völlig eben und zueinander parallel. Hiermit wird eine einfache und sichere Stapelbarkeit einer Anzahl solcher Tuben erreicht, und zwar ohne daß eine Umverpackung erforderlich ist. Die vorstehend zum Stand der Technik erläuterten Merkmale und deren Wirkungen berühren den Gegenstand der Erfindung und die hiermit erzielten Vorteile nicht.

Erwähnt sei noch, daß beim bekannten Stand der Technik sowohl bei werksseitiger automatischer Aufbringung des Schraubverschlusses als auch bei Aufbringung von Hand eine dichtende Anlage des Schraubverschlusses am Außengewindehals sichergestellt werden muß. Dabei besteht die Gefahr, daß der Schraubverschluß zu weit aufgeschraubt wird, oder daß der Schraubverschluß sich löst, falls der Schraubverschluß nur ungenügend weit aufgeschraubt wird.

Demgegenüber liegt der Erfindung zunächst die Aufgaben- bzw. Problemstellung zugrunde, die Ausbildung einer solchen Tube zu verbessern, insbesondere eine große Stabilität des Tubenkörpers und des Verschlusses bei gleichzeitiger Optimierung der einsetzbaren Kunststoffe zu erreichen, und zwar bei sehr geringen Herstellungskosten.

Diese Aufgabe wird bei einer Tube gemäß dem eingangs genannten Oberbegriff des Anspruches 1 zunächst dadurch gelöst, daß gemäß dem Kennzeichen des Anspruches 1 die Schulter und das angrenzende Ende des Tubenkörpers ein Polygon bilden, das sich in einem entsprechenden Polygon des Querschnittes des Tubenkörpers fortsetzt und daß zumindest zwei Seitenflächen des Tubenkörpers von dieser Übergangsstelle her etwa eben oder geradflächig zum Tubenende hin verlaufen.

Die erfindungsgemäße Kunststofftube weist den Vorteil auf, daß die Ausgestaltung des Tubenkörpers in Form eines Polygons gegen äußeren Druck sehr stabil ist. Weiterhin ist von Vorteil, daß eine die Ästhetik des Betrachters ansprechende Formgestaltung erreichbar ist. Hierzu wird auf die späteren Erläuterungen verwiesen, und zwar auch hinsichtlich des ästhetischen Gesamteindruckes bei aufgeschraubtem Verschluß. Mit dem Anspritzen der Schulter an den Tubenkörper werden zwei Dinge in einem Arbeitsgang erreicht, zum einen die Verbindung von Schulter und Außengewindehals mit dem Tubenkörper und zum zweiten die Bildung der Schulter und des damit einstückigen Außengewindehalses. Im Gegensatz zu denjenigen Tuben gemäß dem erläuterten Stand der Technik, bei denen der Tubenkörper und die Schulter mit Gewindehals zusammen aus ein und demselben Kunststoff hergestellt sind, ergeben sich hierdurch die zusätzlichen Vorteile, daß man den Tubenkörper mit sehr geringen Kosten aus einem extrudierten Schlauch oder Rohr eines Kunststoffes von solchen Eigenschaften herstellen kann, die optimal für einen solchen Tubenkörper sind, wobei die Einheit aus der Schulter und dem Außengewindehals aus einem in der Regel gegenüber dem Werkstoff des Tubenkörpers wesentlich härteren Material gebildet wird. Auch sind Kunststoffe unterschiedlicher Färbung für Tubenkörper und Verschluß einsetzbar. Es ist also auch der hierfür optimale Kunststoff wählbar. Ein weiterer Vorteil der erfindungsgemäßen Kunststofftube liegt darin, daß das Bedrucken des Tubenkörpers auf einfache Art und Weise durchführbar ist. Es ist nämlich durch die etwa ebenen Seitenflächen des Tubenkörpers eine genaue Positionierung des Aufdrucks möglich, wobei gleichzeitig der Vorteil einer guten optischen Lesbarkeit erreicht wird. Eine völlig plane Ausführung der Seitenflächen, wie sie bei DE-OS 4100757 und bei PCT/EP 91/02164 erforderlich ist, muß jedoch beim Gegenstand der vorliegenden Erfindung nicht sein. Dies erleichtert den Übergang von den bedruckten Seitenflächen zu den übrigen Flächen des Tubenkörpers und gibt außerdem dem Tubenkörper ein gefälligeres Aussehen. Ferner besteht der Vorteil, daß der Aufdruck auf den Tubenkörper erfolgen kann, bevor Schulter mit Außengewindehals angespritzt werden (siehe hierzu auch die später zu erläuternden Vecfahrensansprüche). Die erfindungsgemäße Kunststofftube weist außerdem den Vorteil auf, daß durch die Ausgestaltung des Tubenkörpers in Form eines Polygons der Schraubverschluß in seiner Endlage beim Aufschrauben auf das Gewinde des Außengewindehalses - falls erwünscht - exakt nach den Ecken des Polygons ausgerichtet werden kann. Dadurch wird dem Benutzer das Erreichen der Verschließlage der Kunststofftube auch optisch gesehen verdeutlicht.

Die nachfolgend erläuterten Merkmale des Anspruches 2 bewirken in Kombination mit den vorstehend angegebenen Merkmalen des Anspruches 1 und unter Beibehaltung der mit den Merkmalen des Anspruches 1 erreichten Vortcile eine Abdichtung zwischen dem aufgebrachten Verschluß und dem Außengewindehals, sowie ein Hineingleiten des Verschlusses in diese Endstellung. Hiermit ist in der bevorzugten Ausführungsform nach Anspruch 2 vorgesehen, daß die Schulter vom Fußbereich des Außengewindehalses her sich in Richtung zur Verbindungsstelle zwischen ihr und dem Tubenkörper hin in Form eines Konus oder einer Wölbung erweitert, wobei die Innenfläche des Konus oder die konkave Innenfläche der Wölbung zu dem zum Außengewindehals entgegengesetzt liegenden Einfüllende des Tubenkörpers hin gerichtet sind und die Außenfläche des Konus oder die konvexe Außenfläche der Wölbung als Führungsund Auflagefläche für den Rand des Verschlusses und seine Abstützung auf der Schulter in der Endstellung dienen. Hiermit wird zum einen der Verschluß in der endgültigen Lage zum Tubenkörper ausgerichtet; insbesondere erfolgt eine Zentrierung des Verschlusses auf dem Tubenkopf. Außerdem liegt am Ende des Aufschraubvorganges der Verschluß dichtend am Außengewindehals an.

Bei einer ersten Ausführungsform der Erfindung nach Patentanspruch 3 geht der Außengewindehals im Fußbereich in eine viereckige, bevorzugt gewölbte Schulter über, woran sich der im Querschnitt viereckige Bereich des Tubenkörpers anschließt. Der Rand des Schraubverschlusses gleitet gemäß Anspruch 4 am Ende des Aufschraubvorganges auf der Schulter des Außengewindehalses auf, wobei erst nach Überwindung einer dabei entstehenden Reibungskraft der Schraubverschluß in eine Rast- und Schnappverbindung mit dem Außengewindehals hineingleitet. Die weiteren Vorteile wie ästhetische Formgestaltung, genaue Positionierung, gute Lesbarkeit und Ausrichtung zur optischen Verdeutlichung des Verschlusses wurden bereits erläutert.

Gegenüber dem aus der DE-PS 41 00 894 bekannten Schnapp- und Schraubverschluß wird bei der erfindungsgemäßen Kunststofftube der Schraubverschluß nicht in die Rastlage verschoben, sondern der Schraubverschluß wird unter Überwindung einer am Ende des Aufschraubvorganges auftretenden Reibungskraft und gegebenenfalls Verformungskraft zwangsläufig in die dichtende Anlage des Schraubverschlusses am Außengewindehals weitergedreht. Diese Zwangsläufigkeit beim Aufschraubvorgang (auch als Hineingleiten beim Aufschraubvorgang bezeichnet) oder beim Öffnen des Schraubverschlusses ist auf das hohe Drehmoment zur Überwindung der Reibungskraft und der Gegenkraft aufgrund der Verformung des elastischen Materiales der Schulter zurückzuführen. Weiterhin besteht der o.g. Vorteil, daß durch die deckungsgleiche Lage von im Querschnitt viereckigem Schraubverschluß und viereckiger Schulter der korrekte Verschluß offensichtlich ist.

Bei einer zweiten Ausführungsform der Erfindung nach Patentanspruch 9 geht der Außengewindehals im Fußbereich in eine elliptische, bevorzugt gewölbte Schulter über, woran sich ein im Querschnitt sechseckförmig ausgestalteter Tubenkörper anschließt. Im Vergleich zur ersten Ausgestaltung der Erfindung ist keine Rast- und Schnappverbindung zwischen Schraubverschluß und Außengewindehals vorgesehen, sondern die zu überwindende Reibungskraft und gegebenenfalls Verformungskraft gemäß Anspruch 10 dient zur Sicherung einer dichtenden Anlage des Schraubverschlusses am Außengewindehals. Auch hier findet das o.g. zwangsläufige Hineingleiten beim Aufschraubvorgang statt. Die auch hier bestehenden weiteren Vorteile wie ästhetische Formgestaltung, genaue Positionierung, gute Lesbarkeit und Ausrichtung zur optischen Verdeutlichung des Verschlusses wurden bereits erläutert.

Die Flexibilität der verwendeten Kunststoffe und deren Gleitfähigkeit aneinander können so gewählt werden, daß die Reibungskraft und gegebenenfalls auch die Verformungskraft in weitem Bereich einstellbar ist, bzw. sind. Der hierbei auftretende Widerstand kann meßtechnisch einfach erfaßt werden und zur Steuerung einer automatischen Aufschraubvorrichtung benutzt werden. Das elastische Kunststoffmaterial bewirkt, daß der Schraubverschluß beliebig oft geschlossen und wieder geöffnet werden kann. Weiterhin ist von Vorteil, daß die dichtende Anlage des Schraubverschlusses am Außengewindehals zuverlässig gesichert ist, da zum Öffnen das gleiche Drehmoment wie beim Aufschrauben des Schraubverschlusses am Schraubverschluß aufgebracht werden muß.

Die Ausführungsform der Erfindung gemäß Patentanspruch 5 weist den Vorteil auf, daß die Rast- und Schnappverbindung zwischen den am umlaufenden Wulst angeordneten Vorsprüngen des Außengewindehalses und den Ausnehmungen der Hülse fertigungstechnisch einfach herstellbar ist und eine sichere, formschlüssige Verbindung erreicht wird.

Bei einer bevorzugten Ausführungsform der Erfindung gemäß Patentanspruch 6 kann durch die Dimensionierung der Keilfläche auf einfache Art und Weise die Gleitfähigkeit verbessert, sowie sichergestellt werden, daß die Elastizitätsgrenze der Hülse nicht überschritten wird. Durch das Aufgleiten der Innenfläche der Hülse auf die Keilfläche beim Entrasten tritt ein Aufspreizen der Hülse auf.

Die Ausführungsform der Erfindung gemäß Patentanspruch 7 weist den Vorteil auf, daß eine Anschlagfläche realisiert ist, durch die ein Überdrehen des Schraubverschlusses beim Aufschraubvorgang zuverlässig vermieden wird. Zusätzlich kann gemäß der Ausführungsform nach Patentanspruch 8 durch Abstützen der Ansätze auf der Schulter diese Drehbegrenzung noch verstärkt werden.

In der o.g. weiteren Ausführungsform der Erfindung gemäß Anspruch 9 geht der Außengewindehals im Fußbereich in eine elliptisch, bevorzugt gewölbte Schulter über, woran sich der im Querschnitt sechseckförmig ausgestaltete Tubenkörper anschließt. Hiermit wird eine optisch, ästhetisch ansprechende Form des Tubenkörpers geschaffen, welche an entsprechend breit ausgebildeten Flächenabschnitten dieses Sechseckes bedruckt werden kann. Der analoge Vorteil ist auch bei der erstgenannten Ausführungsform mit einem im Querschnitt viereckigen Tubenkörper gemäß Anspruch 3 gegeben.

Die Ausführungsform der Erfindung gemäß Patentanspruch 12 weist den Vorteil auf, daß durch den Anschlag ein Überdrehen des Schraubverschlusses am Ende des Aufschraubvorganges zuverlässig vermieden wird.

Die Ausführungsform der Erfindung nach Patentanspruch 13 ermöglicht dem Benutzer durch Angriff der Drehkraft in der Hauptachse des Schraubverschlusses die Überwindung auch hoher Reibungskräfte bzw. Verformungskräfte. Ferner werden hierdurch die deckungsgleiche Lage von Schraubverschluß und Schulter sichergestellt.

Die Ausführungsform gemäß Patentanspruch 14, welche bei beiden Ausgestaltungen der Erfindung einsetzbar ist, weist den besonderen Vorteil auf, daß stets ein vollständiges Öffnen der Kunststofftube sichergestellt ist.

Weiterhin kann mit den Merkmalen des Patentanspruches 15 bei geschlossener Kunststofftube sich ein optisch gefälliger Übergang zwischen Schraubverschluß und Tubenkörper erzielen lassen.

Mit den Merkmalen des Patentanspruches 16 kann die Dichtigkeit des Schraubverschlusses noch weiter verbessert werden.

Durch die Überlappung von Schulter und Ende des Tubenkörpers im jeweiligen Randbereich gemäß Patentanspruch 17 kann sichergestellt werden, daß der Tubenkörper nicht in diesem Übergangsbereich bei hoher Druckbelastung aufreist. Überlappt gemäß Patentanspruch 18 der Tubenkörper den Außengewindehals, so kann auf einfache fertigungstechnische Art und Weise ein stetiger und abgerundeter Übergang zwischen Tubenkörper und Außengewindehals geschaffen werden. Hierzu ist es von Vorteil, wenn die im Patentanspruch 15 erwähnte Abschrägung sich an der Außenseite der Schulter befindet.

Die Erfindung betrifft weiterhin ein Verfahren zur Herstellung einer solchen Kunststofftube. Dabei weisen die erfindungsgemäßen Verfahren nach Patentanspruch 19 oder 20 den Vorteil auf, daß der zur Herstellung der Kunststofftube erforderliche fertigungstechnische Aufwand gering ist. Es ist keine komplizierte Spritzform nötig. Dabei ist zudem eine Kunststofftube herstellbar, welche gegen äußeren Druck sehr stabil ist. Durch das Anspritzen der Schulter an den Tubenkörper wird zudem sichergestellt, daß auch bei extremer Druckbelastung von außen her die Kunststofftube nicht im Übergang zwischen Schulter und Tubenkörper aufreist. Durch das Aufbringen einer Tastmarke am Tubenkörper in Verbindung mit der besonderen Form des Tubenkörpers in Form eines Polygons wird auf einfache und sichere Art und Weise das Aufdrucken der Tubenbeschriftung und/oder die Positionierung des Tubenkörpers ermöglicht. Es ist zwar aus der Literaturstelle G 94 09 998.7 bekannt, eine Injektionsspritze an der Schulter einer Tube anzuschweißen. Doch sind hierbei im Gegensatz zur vorliegenden Erfindung Schulter und Tubenkörper miteinander einstückig. Außerdem wird die Injektionsspritze vor ihrer Verbindung mit der Tube gefertigt, nicht aber zusammen mit ihrem Anspritzen an der Tube gebildet.

Gemäß Patentanspruch 21 wird der Rand des Tubenkörpers vor dem Einspritzen des Kunststoffes eingebördelt. Hierdurch wird ein kontinuierlicher Übergang zwischen Schrägfläche der Schulter und der geraden Seitenflächen des Tubenkörpers erreicht.

Weitere Vorteile und Merkmale der Erfindung sind den weiteren Unteransprüchen, auf die hiermit ausdrücklich Bezug genommen wird, zu entnehmen. Sie ergeben sich ferner aus der nachfolgenden Beschreibung und der Zeichnung mit darin dargestellten, sowie beschriebenen und erläuterten Ausführungsformen der Erfindung. Es zeigen:
- Fig. 1:: eine erste Ausführungsform der Erfindung, wobei die rechte Hälfte einen teilweisen Längsschnitt und die linke Hälfte eine Ansicht darstellen,
- Fig. 2:: die Einzelheit A der Fig. 1 im vergrößerten Maßstab,
- Fig. 3:: eine Draufsicht auf die Kunststofftube ohne Schraubverschluß gemäß Fig. 1,
- Fig. 4:: eine Draufsicht auf den Schraubverschluß nach Fig. 1,
- Fig. 5:: einen Längsschnitt entlang der Ebenen V-V der Fig. 4,
- Fig. 6:: eine zweite Ausführungsform der Erfindung, wobei die rechte Hälfte einen teilweisen Längsschnitt und die linke Hälfte eine Ansicht darstellen,
- Fig. 7:: eine teilweise geschnittene Seitenansicht der zweiten Ausführungsform gemäß dem Pfeil VII in Fig. 6,
- Fig. 8:: die Einzelheit B der Fig. 6 im vergrößerten Maßstab,
- Fig. 9:: eine Draufsicht auf diese Kunststofftube ohne Schraubverschluß,
- Fig. 10:: eine Draufsicht auf den Schraubverschluß,
- Fig. 11:: einen Längsschnitt entlang der Ebene XI-XI in Fig. 10 und
- Fig. 12:: in einem gegenüber der Darstellung in den Fig. 1 bis 11 vergrößerten Maßstab einen Teilschnitt entlang der Linie XII-XII der Fig. 9, teilweise weggebrochen.

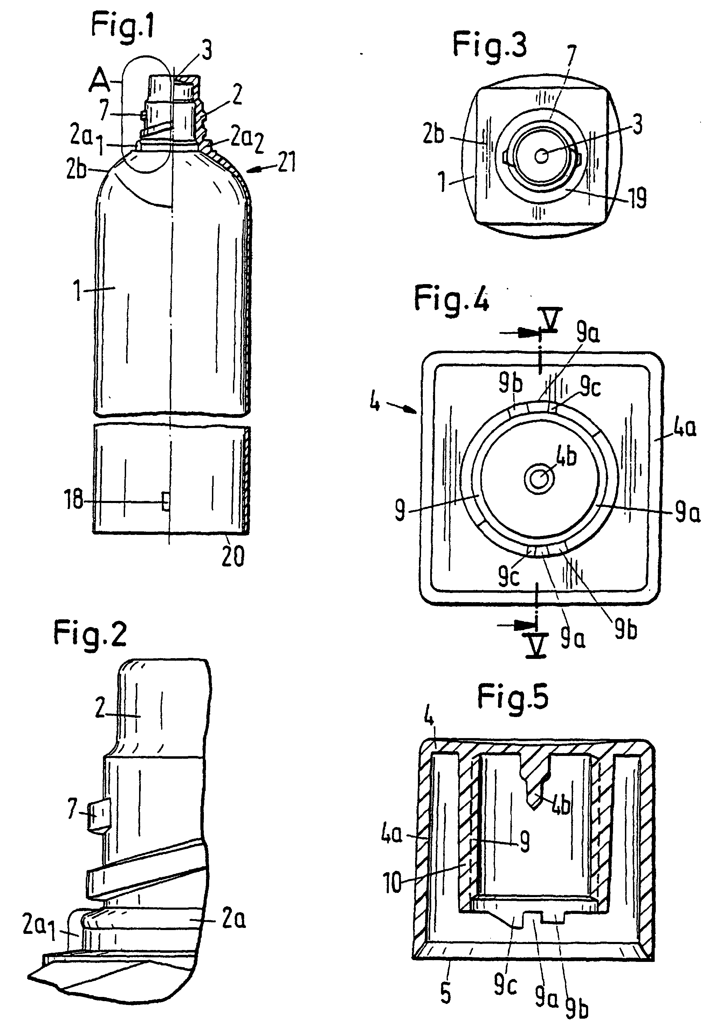

Fig. 1 zeigt eine erste Ausgestaltung der erfindungsgemäßen Kunststofftube mit einem Tubenkörper in Form eines viereckigen Polygons. Der schlauchförmige Tubenkörper 1 geht in einen Außengewindehals 2 über. Ein Schraubverschluß 4 (siehe Fig. 4) ist auf das Gewinde 7 des Außengewindehalses 2 aufschraubbar. Im Bereich 21, d.h. am in der Zeichnung obersten Bereich des Endes 1' des Tubenkörpers 1 ist mit dem Herstellen der Schulter 2b und des Schraubgewindehalses 2 eine feste, angespritzte Schweißverbindung mit dem Tubenkörper 1 geschaffen. Im einzelnen wird hierzu auf die zum Schluß der Beschreibung erfolgende Erläuterung erfindungsgemäßer Verfahrensmaßnahmen verwiesen. Von diesem Anspritzoder Verbindungsbereich 21 her erstreckt sich die Schulter nach oben hin konisch zusammenlaufend bis zu dem Schraubgewindehals 2. Wie schon erwähnt, kann dieser Konus auch eine Wölbung bilden. Die Schulter 2b und der Außengewindehals 2 sind miteinander einstückig.

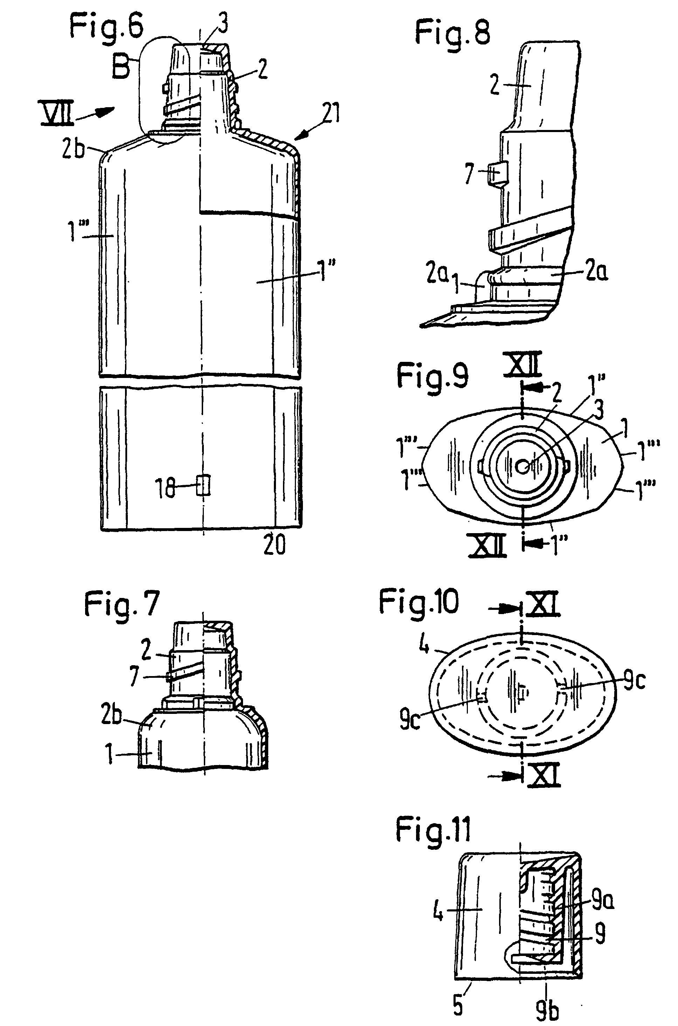

Sowohl für diese erste Ausgestaltung (Fig. 1) als auch für eine noch näher zu erläuternde zweite Ausgestaltung der Erfindung (Fig. 6) ist gemeinsam, daß der Außengewindehals 2 in seinem Fußbereich 2a in eine Schulter 2b derart übergeht, daß Schulter 2b und angrenzendes Ende des Tubenkörpers 1 ein Polygon bilden. Bei der ersten Ausgestaltung der Erfindung verlaufen zumindest zwei Seitenflächen des Tubenkörpers 1 von der Übergangsstelle her etwa eben oder gradflächig zum Tubenende 20 hin. Bei der zweiten Ausgestaltung der Erfindung sind sechs Seitenflächen vorhanden. Gemeinsam ist beiden Ausgestaltungen der Erfindung, daß der in der Zeichnung unten gelegene Rand 5 des Schraubverschlusses 4 (siehe Fig. 5; Fig. 11) auf der Schulter 2b des Außengewindehalses 2 beim Zuschrauben aufgleitet. Durch Wahl eines entsprechend elastischen Kunststoffmaterials für die Schulter 2b muß am Ende des Aufschraubvorganges erst eine beim Aufgleiten des Randes 5 auf die Schulter 2b entstehende Reibungskraft und gegebenenfalls auch Verformungskraft überwunden werden. Bei der ersten Ausgestaltung der Erfindung ist die dichtende Anlage des Schraubverschlusses 4 am Außengewindehals 2 sowohl durch eine Rast- und Schnappverbindung 2a1, 1a2, 9a, 9b, 9c als auch durch diese zu überwindende Reibungs- bzw. Verformungskraft gesichert. Bei der zweiten Ausgestaltung der Erfindung dient diese Reibungskraft ausschließlich zur Sicherung der dichtenden Anlage des Schraubverschlusses 4 am Außengewindehals 2.

Bei der in den Fig. 1 - 5 der Zeichnung dargestellten ersten Ausführungsform der Erfindung geht der Außengewindehals 2 im Fußbereich 2a in eine viereckige, hier nach außen gewölbte Schulter 2b über, woran sich der im Querschnitt viereckige Bereich des Tubenkörpers 1 anschließt. Dieser Bereich erstreckt sich über die wesentliche Länge des Tubenkörpers. Der in den Fig. 4 und 5 dargestellte Schraubverschluß 4 besteht aus einer im Querschnitt gesehen viereckigen Kappe 4a und einer vom Boden der Kappe 4a sich in Längsrichtung erstreckenden Hülse 10 mit Innengewinde 9. Der Außengewindehals 2 weist an seinem Fußteil, d.h. am Übergang zur Schulter 2b eine umlaufende Wulst 2a auf, an welcher zwei diametral gegenüberliegende Vorsprünge 2a1, 2a2 angeordnet sind. Diese Vorsprünge greifen zur Rast- und Schnappverbindung in an der Stirnseite der Hülse 10 angeordnete, sich diametral gegenüberliegenden Ausnehmungen 9a ein. Im Bereich der Ausnehmungen 9a kann die Hülse 10 bzw. das Innengewinde 9 aus einem elastischen Kunststoffmaterial hergestellt sein, wobei im Rahmen der Erfindung auch die gesamte Hülse bzw. der Schraubverschluß aus elastischem Kunststoffmaterial bestehen können. Im einzelnen weisen die Vorsprünge 2a1, 2a2 jeweils eine Keilfläche auf, auf die zum Entrasten die Hülse 10 mit der Innenfläche im Bereich der Ausnehmungen 9a aufgleitet. Die dabei entstehende Spreizwirkung auf die Hülse 10 muß so dimensioniert werden, daß die Elastizitätsgrenze des benutzten Kunststoffmaterials nicht überschritten wird.

An der Stirnseite der Hülse 10 sind jeweils diametral gegenüberliegende Ansätze 9b, 9c mit durch die Ausnehmungen 9a getrennten, rechteckförmigen Teilen 9b und sägezahnförmigen Teilen 9c angeformt. Die Höhe des rechteckförmigen Teiles 9b ist dabei kleiner gewählt als die des sägezahnförmigen Teiles 9c. Durch diese Dimensionierung von rechteckförmigen und sägezahnförmigen Teilen 9b, 9c stützt sich bei der Schnapp- und Rastverbindung nur der sägezahnförmige Teil 9c auf der Schulter 2b ab. Hierbei wirkt sich der Effekt der Elastizität des Kunststoffmaterials der Schulter und die dabei erzeugte Vorspannung unmittelbar als Drehsicherung aus.

Wie die Zeichnungen, z.B. Fig. 7 bzw. Fig. 11 im einzelnen aufzeigen, können das Innengewinde 9 des Schraubverschlusses 8 und das Gewinde 7 des Außengewindehalses 2 so lang bemessen sein, daß durch den bei der Überwindung der Reibungskraft auftretenden elastischen Widerstand des Werkstoffes der Schulter 2b das Innengewinde 9 und das Gewinde 7 zwangsläufig außer Eingriff kommen, wonach der Schraubverschluß 4 abziehbar ist. Vorzugsweise wird ein rechteckiges Gewindeprofil benutzt, wobei Durchmesser und Steigung in Verbindung mit einer konischen Verjüngung des Außengewindehalses derart gewählt sind, daß bei einer 90° oder 180° Drehung des Schraubverschlusses 4 die Gewinde außer Eingriff kommen.

Fig. 6 zeigt eine zweite Ausgestaltung der erfindungsgemäßen Kunststofftube, wobei die rechte Hälfte im Längsschnitt und die linke Hälfte in einer Ansicht dargestellt ist. Der Außengewindehals 2 geht im Fußbereich bei dieser Ausgestaltung in eine in ihrer Draufsicht (Fig. 9) etwa elliptische und in ihrem Querschnitt (Fig. 7) nach außen gewölbte Schulter 2b über. An diese Schulter 2b schließt sich ein im Querschnitt sechseckförmig ausgestalteter Tubenkörper 1 an. Der Rand 5 des Schraubverschlusses 4 gleitet auf der Schulter 2b des Außengewindehalses 2 beim Aufschrauben auf.

Die vorstehend und auch zum ersten Ausführungsbeispiel erläuterten Wölbungen haben mehrere Vorteile. Zum einen läßt sich eine so gewölbte Schulter besser spritzen als eine völlig ebene Schulter. Ferner gibt die Wölbung ein optisch sehr ansprechendes Bild. Schließlich ergeben sich keine Kanten, die zwischen eben verlaufenden Flächen der Schulter auftreten könnten. Außerdem sorgen diese nach außen gewölbten Bereiche der Schulter dafür, daß nach Aufsetzen und Verdrehen des Verschlusses dieser die Wölbungen gegen ihre elastische Kraft etwas eindrücken muß. Die hierdurch erreichte Spannung des gewölbten Schultermaterials bringt in der letzten Phase des Aufschraubvorganges den Verschluß von selbst in die endgültige Schließposition.

Es empfiehlt sich für die erläuterten Aufschraubvorgänge, daß gemäß Fig. 1, 6, 7 und 12 die jeweilige Schulter 2b sich vom Fußbereich des Außengewindehalses 2 her sich in ihrem Durchmesser erweiternd schräg von oben/innen nach außen/unten erstreckt und somit in ihrem Querschnitt einen Konus bildet, wobei die Konusfläche bevorzugt nach oben gewölbt ist. Im Vorstehenden sind mit "oben" und "unten" die entsprechende Lage der vorgenannten Figuren in den Zeichnungsblättern gemeint.

Wie Fig. 10 und Fig. 11 im einzelnen zeigen, besteht der Schraubverschluß 4 aus einer ovalen Kappe 4a und einer vom Boden der Kappe 4a sich in Längsrichtung erstreckenden Hülse 9a mit Innengewinde 9. Das Innengewinde 9 weist im Stirnbereich eine umlaufende Fase 9b auf. Am Übergang zur Schulter 2b ist am Außengewindehals 2 eine umlaufende Wulst 2a angeordnet. Die Wulst 2a weist zwei diametral gegenüberliegende Vorsprünge 2a1, 2a2 auf. Diese Vorsprünge 2a1, 2a2 liegen in der Hauptachse des elliptischen Querschnittes der Schulter 2b und wirken für ein keilförmiges Gegenstück 9c der Hülse 9a als Anschlag zur Begrenzung der Drehbewegung. Zur Erzielung einer Drehsicherung sind das Innengewinde 9 und das Gewinde 7 so lang bemessen, daß die Fase 9b am Ende des Aufschraubvorganges auf die Wulst 2a aufgleitet.

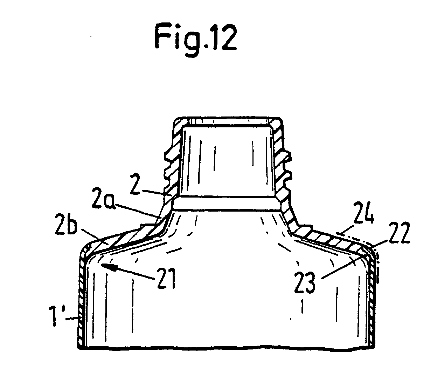

Nachfolgend wird zunächst das Verfahren zur Herstellung der ersten Ausführungsform (Fig. 1 - 5) der Erfindung erläutert, bei dem das Polygon am Übergang von der Schulter zum Tubenkörper ein Viereck bildet. In einem ersten Fertigungsschritt wird ein schlauchförmiger Vorformling des Tubenkörpers aus thermoplastischem Kunststoff durch Extrusion, beispielsweise durch eine Ringdüse, hergestellt. Dieser Vorformling ist im Querschnitt rund. Zur eindeutigen Positionierung des Tubenkörpers bei den nachfolgenden Fertigungsschritten wird nach der Extrusion eine Tastmarke 18 am Tubenkörper 1 aufgebracht. Zugleich hiermit wird die Beschriftung usw. mit aufgedruckt. In einem dritten Fertigungsschritt wird dieser Tubenkörper 1 anhand der Tastmarke 18 in einem Werkzeug ausgerichtet und darin in Form eines viereckigen Polygons verformt. Beispielsweise kann hierfür ein Hohlkörperblaswerkzeug vorgesehen werden, in welchem der Tubenkörper in Form des Polygons aufgeweitet wird. Diese Verformung kann auch durch ein Innenwerkzeug geschehen, dessen Außenfläche die erforderliche Formgebung zur Schaffung der o.g. viereckigen Form aufweist. Es kann entweder mit Hilfe des Innenwerkzeuges, das mit dem Außenwerkzeug zusammenarbeitet, oder durch eine gesonderte Maßnahme eine Umbördelung 22 des Endes 1' des Tubenkörpers nach innen erfolgen (siehe Fig. 12). Diese Umbördelung ist jedoch nicht Voraussetzung für die Herstellung der Tube. Schließlich wird in einem weiteren, letzten Fertigungsschritt der Außengewindehals 2 mit Schulter 2b durch Spritzen innerhalb des Werkzeuges hergestellt, das auch den Tubenkörper 1, zumindest sein die Verbindung mit der Schulter 2b aufweisendes Ende 1' umgibt. Zugleich mit diesem Spritzen des Kunststoffmaterials des Außengewindehalses 2 und der Schulter 2b verschweißt dieses Material sich mit dem Material des Endes 1' des Tubenkörpers und bildet dort eine unlösbare, im Ergebnis einstückige Schweißverbindung.

Zur Herstellung einer Tube in der zweiten Ausführungsform gemäß den Figuren 6 bis 11 mit einem Polygon-Querschnitt des Tubenkörpers und des angrenzenden Endes der Schulter 2b in Form eines Sechseckes kann das erfindungsgemäße Verfahren wie folgt variiert werden:

Der Tubenkörper 1 wird in der endgültigen Querschnittsform extrudiert, die insbesondere der Draufsicht gemäß Fig. 9 zu entnehmen ist. Hierbei liegen zwei längere Seiten 1" einander gegenüber, die der späteren Bedruckung dienen. Zum Querschnitt gehören zwei mal zwei schmälere Seitenflächen 1"', die zusammen mit den Seitenflächen 1" das o.g. Sechseck bilden. Danach erfolgt das Bedrucken einer oder beider Seitenflächen 1", wobei zugleich die Tastmarke 18 mit aufgebracht wird. Der Tubenkörper 1 wird dann in dieser endgültigen Form in die Spritzmaschine bzw. Spritzwerkzeug eingebracht. Es sind dort keine Mittel zur Schaffung des sechseckigen Querschnittes mehr nötig. Im übrigen erfolgt das Herstellen und Anspritzen des Außengewindehalses 2 mit Schulter 2b in der gleichen Weise wie bereits vorstehend anhand der Herstellung des Tubenkörpers mit viereckigem Querschnitt erläutert.

Es versteht sich, daß die Erfindung nicht auf Tubenkörper mit den vorgenannten Querschnitten beschränkt ist. Doch sind diese Querschnitte sowohl hinsichtlich ihrer optisch-ästhetischen Ausgestaltung als auch der Aufbringungbarkeit eines Aufdruckes besonders geeignet.

Wie insbesondere Fig. 12 zeigt, überlappen sich Schulter 2b und Ende 1' des Tubenkörpers 1 in ihren Rändern im Bereich 21 miteinander, wobei vorzugsweise von außen her gesehen der Randbereich des Endes 1' des Tubenkörpers 1 den Randbereich des Außengewindehalses 2 übergreift. Somit ist nach Durchführung des Spritz- und Schweißvorganges dieser Endbereich der Schulter 2b an seiner Innenseite hin abgeschrägt, d.h. sich zu seinem Ende hin verjüngend ausgebildet. Da ferner die Außenflächen der Schulter 2b und des Tubenkörpers 1, 1' an der Innenwand der nur strichpunktiert angedeuteten Spritzform 24 anliegen, ist von außen her praktisch keine Übergangskante vom Ende 1' des Tubenkörpers zur Schulter 2b zu erkennen. Es ergeben sich also nahezu kantenlose, mit dem Auge nicht mehr erkennbare Übergänge von den Flächen der Schulter zu den Flächen des Tubenkörpers.

Der Schweißvorgang kann beispielsweise nach dem Wärmeimpulsverfahren erfolgen. Beim Spritzvorgang etwa auftretende Unebenheiten wie Materialüberschüsse können beseitigt werden, so daß eine einwandfreie Oberfläche ohne Kanten und Nähte entsteht. Tubenkörper 1 und Außengewindehals 2 mit Schulter 2b werden aus thermoplastischem Material, vorzugsweise Polyäthylen, hergestellt. Aufgrund der geforderten mechanischen Festigkeit und im Hinblick auf den Gebrauchswert der Kunststofftube kann der Schraubverschluß aus Polyäthylen hart hergestellt werden. Da die erfindungsgemäße Kunststofftube vorzugsweise zur Verpackung von hochwertiger Kosmetika eingesetzt wird, spielt die optische Eigenschaft des benutzten thermoplastischen Materials und auch die spätere Gestaltfestigkeit insbesondere im Hinblick auf die Ausbildung von Gebrauchsspuren im Bereich der Schulter 2b eine wesentliche Rolle. Bei der erfindungsgemäßen Kunststofftube werden diese hohen Anforderungen auf einfache Art und Weise erfüllt.

## Patentansprüche

1. Kunststofftube mit einem schlauchförmigen Tubenkörper (1), welcher über eine Schulter (2b) in einen Außengewindehals (2) übergeht und mit einem Schraubverschluß (4), der mit einem Innengewinde (9) auf das Gewinde (7) des Außengewindehalses (2) aufschraubbar ist, wobei die Schulter (2b) an das zugehörige Ende (1') des Tubenkörpers (1) angespritzt ist und wobei die Schulter mit dem Außengewindehals einstückig ist, **dadurch gekennzeichnet, daß** die Schulter (2b) und das angrenzende Ende des Tubenkörpers (1) ein Polygon bilden, das sich in einem entsprechenden Polygon des Querschnittes des Tubenkörpers fortsetzt und daß zumindest zwei Seitenflächen des Tubenkörpers (1) von dieser Übergangsstelle her etwa eben oder gradflächig zum Tubenende (20) hin verlaufen.

2. Kunststofftube nach Anspruch 1, bei der die Schulter (2b) vom Fußbereich (2a) des Außengewindehalses (2) sich in Richtung zu ihrem Verbindungsbereich (21) mit dem Tubenkörper (1, 1') hin in Form eines Konus oder Wölbung erweitert, wobei die Innenfläche des Konus oder die konkave Innenfläche der Wölbung zum Einfüllende des Tubenkörpers gerichtet ist und die Außenfläche des Konus bzw. die konvexe Außenfläche der Wölbung als Führungsund Auflagefläche für das Aufschrauben des Verschlusses und sein Bringen in die endgültige aufgeschraubte Lage (Endstellung) dient.

3. Kunststofftube nach Anspruch 1 oder 2, bei der der Außengewindehals (2) in seinem Fußbereich in eine viereckige, bevorzugt gewölbte Schulter (2b) übergeht, woran sich ein viereckiger Teilbereich des Tubenkörpers (1) anschließt.

4. Kunststofftube nach Anspruch 3, bei der der Rand (5) des Schraubverschlusses (4) auf der Schulter (2b) des Außengewindehalses (2) beim Zuschrauben aufgleitet, wobei durch Wahl eines elastischen, flexiblen Kunststoffmaterials für die Schulter (2b) der Schraubverschluß (4) am Ende des Aufschraubvorgangs erst bei Überwindung einer dabei entstehenden Reibungskraft und gegebenenfalls auch Verformungskraft des elastischen Materiales der Schulter in eine Rast- und Schnappverbindung (2a1, 2a2, 9a, 9b, 9c) mit dem Außengewindehals (2) hineingleitet, wodurch der Schraubverschluß (4) in einer dichtenden Anlage am Außengewindehals (2) gesichert ist.

5. Kunststofftube nach Anspruch 4, bei der der Schraubverschluß (4) aus einer im Querschnitt viereckigen Kappe (4a) und einer vom Boden der Kappe (4a) sich in Längsrichtung erstreckenden Hülse (10) mit Innengewinde (9) besteht und daß der Außengewindehals (2) am Übergang zur Schulter (2b) eine umlaufende Wulst (2a) aufweist, an welcher zwei diametral gegenüberliegende Vorsprünge (2a1, 2a2) angeordnet sind, die zur Rast- und Schnappverbindung in an der Stirnseite der Hülse (10) angeordnete, diametral gegenüberliegende Ausnehmungen (9a) eingreifen.

6. Kunststofftube nach Anspruch 5, bei der das Innengewinde (9) im Bereich der Ausnehmungen (9a) aus einem elastischen Kunststoffmaterial besteht und daß die Vorsprünge (2a1, 2a2) jeweils eine Keilfläche aufweisen, auf die zum Entrasten die Hülse (10) mit der Innenfläche im Bereich der Ausnehmungen (9a) aufgleitet.

7. Kunststofftube nach Anspruch 5, bei der an der Stirnseite der Hülse (10) jeweils diametral gegenüberliegende Ansätze (9b, 9c) mit durch die Ausnehmungen (9a) getrennte rechteckförmige (9b) und sägezahnförmige Teile (9c) angeformt sind.

8. Kunststofftube nach Anspruch 7, bei der die Höhe des rechteckförmigen Teils (9b) kleiner ist als die des sägezahnförmigen Teils (9c), wodurch sich bei der Schnapp- und Rastverbindung der sägezahnförmige Teil (9c) auf der Schulter (2b) abstützt.

9. Kunststofftube nach Anspruch 1 oder 2, bei der der Außengewindehals (2) im Fußbereich in eine elliptische, bevorzugt gewölbte Schulter (2b) übergeht, woran sich ein im Querschnitt sechseckförmig ausgestalteter Tubenkörper (1) anschließt.

10. Kunststofftube nach Anspruch 9, bei der der Rand (5) des Schraubverschlusses (4) auf der Schulter (2b) des Außengewindehalses (2) beim Zuschrauben aufgleitet und daß durch Wahl eines elastischen, flexiblen Kunststoffmaterials für die Schulter (2b) der Schraubverschluß (4) am Ende des Aufschraubvorgangs erst bei Überwindung einer dabei entstehenden Reibungskraft und gegebenenfalls auch Verformungskraft in die dichtende Anlage am Außengewindehals (2) hineingleitet, wobei das Überwinden dieser Reibungskraft zur Sicherung dieser dichtenden Anlage des Schraubverschlusses (4) am Außengewindehals (2) dient.

11. Kunststofftube nach Anspruch 10, bei der der Schraubverschluß (4) aus einer ovalen Kappe (4a) und einer vom Boden der Kappe (4a) sich in Längsrichtung erstreckenden Hülse (9a) mit Innengewinde (9) besteht, daß das Innengewinde (9) im Stirnbereich eine umlaufende Fase (9b) aufweist, daß der Außengewindehals (2) am Übergang zur Schulter (2b) eine umlaufende Wulst (2a) aufweist, und daß die Fase (9b) am Ende des Aufschraubvorgangs auf die Wulst (2a) aufgleitet.

12. Kunststofftube nach Anspruch 11, bei der die Hülse (9a) in Umlaufrichtung ein keilförmiges Gegenstück (9c) aufweist, und daß an der Wulst (2a) zwei diametral gegenüberliegende Vorsprünge (2a1, 2a2) angeordnet sind, die als Anschlag für die Kante des Gegenstückes (9c) dienen.

13. Kunststofftube nach Anspruch 12, bei der die Vorsprünge (2a1, 2a2) in der Hauptachse des elliptischen Querschnittes der Schulter (2b) liegen.

14. Kunststofftube nach einem der Ansprüche 1 bis 12, bei der das Innengewinde (9) des Schraubverschlusses (4) und das Gewinde (7) des Außengewindehals (2) so lang bemessen ist, daß durch den bei der Überwindung der Reibungskraft auftretenden elastischen Widerstand des Werkstoffes der Schulter das Innengewinde (9) und Gewinde (7) zwangsläufig außer Eingriff kommen, wodurch der Schraubverschluß (4) abziehbar ist.

15. Kunststofftube nach einem der Ansprüche 1 bis 14, bei der die Schulter (2b) in Richtung des Randbereichs abgeschrägt ist.

16. Kunststofftube nach einem der Ansprüche 1 bis 15, bei der der Außengewindehals (2) eine Austrittsöffnung (3) für den Tubeninhalt aufweist, in welche ein am Boden der Kappe (4a) angeordneter Zapfen (4b) greift.

17. Kunststofftube nach einem oder mehreren der Ansprüche 1 bis 15, bei der sich Schulter (2b) und Ende (1') des Tubenkörpers (1) in ihren Randbereichen einander überlappen.

18. Kunststofftube nach Anspruch 17, bei der von außen her gesehen der Randbereich des Tubenkörpers (1) den Randbereich des Außengewindehals (2) übergreift.

19. Verfahren zur Herstellung einer Kunststofftube nach einem der Ansprüche 1 bis 18, bei dem
a) ein schlauchförmiger Vorformling des Tubenkörpers aus thermoplastischen Kunststoff durch Extrusion hergestellt wird,
b) danach eine Tastmarke und gegebenenfalls ein Aufdruck am Tubenkörper aufgebracht wird,
c) danach in einem Werkzeug der Tubenkörper anhand der Tastmarke ausgerichtet und der Tubenkörper in Form eines Polygons verformt, z.B. aufgeweitet wird,
d) in einer Spritzeinheit, welche am Werkzeug anliegt oder zum Werkzeug gehört, ein Außengewindehals mit Schulter durch Spritzen hergestellt wird und dabei
e) Schulter und Tubenkörper miteinander verschweißt werden.

20. Verfahren zur Herstellung einer Kunststofftube nach einem der Ansprüche 1 bis 17, bei dem
a) ein schlauchförmiger Tubenkörper aus thermoplastischem Kunststoff mit seiner endgültigen Querschnittsform durch Extrusion hergestellt wird,
b) danach eine Tastmarke und gegebenenfalls ein Aufdruck am Tubenkörper aufgebracht wird,
c) danach in einem Werkzeug der Tubenkörper anhand der Tastmarke ausgerichtet wird,
d) in einer Spritzeinheit, welche am Werkzeug anliegt oder zum Werkzeug gehört, ein Außengewindehals mit Schulter durch Spritzen hergestellt wird und dabei
e) Schulter und Tubenkörper miteinander verschweißt werden.

21. Verfahren nach Anspruch 19 oder 20, bei dem der Rand (1') des Tubenkörpers vor dem Einspritzen des Kunststoffes umgebördelt (22) wird.

## Claims

1. A plastics tube comprising a tubular body (1) which merges into an externally-threaded neck (2) via a shoulder (2b), and a screw top (4) which can be screwed onto the thread (7) of the externally-threaded neck (2) by means of an internal thread (9), wherein the shoulder (2b) is injection-moulded onto the associated end (1') of the tubular body (1) and wherein the shoulder is formed in one piece with the externally-threaded neck, **characterised in that** the shoulder (2b) and the adjoining end of the tubular body (1) form a polygon which extends into a corresponding polygon of the cross-section of the tubular body, and **in that** at least two lateral surfaces of the tubular body (1) extend in a substantially flat or planar manner from this transition point to the tube end (20).

2. A plastics tube according to claim 1, in which the shoulder (2b) widens in the shape of a cone or a dome from the base region (2a) of the externally-threaded neck (2) towards the region (21) connecting it to the tubular body (1, 1'), wherein the inner surface of the cone or the concave inner surface of the dome is directed towards the filling end of the tubular body, and the outer surface of the cone or the convex outer surface of the dome serves as a guiding and contact surface for screwing on the top and for bringing it into the final screwed-on position (end position).

3. A plastics tube according to claim 1 or 2, wherein the externally-threaded neck (2) merges in its base region into a square, preferably domed shoulder (2b) adjoined by a square sub-region of the tubular body (1).

4. A plastics tube according to claim 3, in which the edge (5) of the screw top (4) slides on the shoulder (2b) of the externally-threaded neck (2) when it is screwed on, wherein, through selection of a resilient, flexible plastics material for the shoulder (2b), the screw top (4) does not slide into a snap-locking connection (2a1, 2a2, 9a, 9b, 9c) with the externally-threaded neck (2) at the end of the screwing-on process until it has overcome a resulting frictional force and possibly also deformation force of the resilient material of the shoulder, as a result of which the screw top (4) is secured in a sealing position on the externally-threaded neck (2).

5. A plastics tube according to claim 4, wherein the screw top (4) comprises a cap (4a) of square cross-section and a sleeve (10) extending from the base of the cap (4a) in the longitudinal direction and provided with an internal thread (9), and wherein the externally-threaded neck (2) has, at the transition to the shoulder (2b), a circumferential bead (2a) on which two diametrically opposing projections (2a1, 2a2) are arranged, which engage in diametrically opposing recesses (9a) arranged on the end of the sleeve (10) to form the snap-locking connection.

6. A plastics tube according to claim 5, wherein the internal thread (9) in the region of the recesses (9a) comprises a resilient plastics material and wherein the projections (2a1, 2a2) each have a wedge surface onto which the inner surface of the sleeve (10) slides in the region of the recesses (9a) for the purpose of disengagement.

7. A plastics tube according to claim 5, wherein diametrically opposing projections (9b, 9c) with rectangular (9b) and sawtooth-shaped parts (9c) separated by the recesses (9a) are formed on the end of the sleeve (10).

8. A plastics tube according to claim 7, wherein the height of the rectangular part (9b) is smaller than that of the sawtooth-shaped part (9c), as a result of which the sawtooth-shaped part (9c) is supported on the shoulder (2b) when the snap-locking connection is formed.

9. A plastics tube according to claim 1 or 2, wherein the externally-threaded neck (2) merges in the base region into an elliptical, preferably domed shoulder (2b) adjoined by a tubular body (1) of hexagonal cross-section.

10. A plastics tube according to claim 9, wherein the edge (5) of the screw top (4) slides on the shoulder (2b) of the externally-threaded neck (2) when it is screwed on and wherein, through selection of a resilient, flexible plastics material for the shoulder (2b), the screw top (4) does not slide into the sealing position on the externally-threaded neck (2) at the end of the screwing-on process until it has overcome a resulting frictional force and possibly also deformation force, the screw top (4) being secured in this sealing position on the externally-threaded neck (2) as a result of this frictional force being overcome.

11. A plastics tube according to claim 10, wherein the screw top (4) comprises an oval cap (4a) and a sleeve (9a) extending from the base of the cap (4a) in the longitudinal direction and provided with an internal thread (9), wherein the internal thread (9) has a circumferential chamfer (9b) in the end region, wherein the externally-threaded neck (2) has a circumferential bead (2a) at the transition to the shoulder (2b), and wherein the chamfer (9b) slides onto the bead (2a) at the end of the screwing-on process.

12. A plastics tube according to claim 11, wherein the sleeve (9a) has a wedge-shaped counterpart (9c) in the circumferential direction and wherein two diametrically opposing projections (2a1, 2a2) are arranged on the bead (2a) and serve as a stop for the edge of the counterpart (9c).

13. A plastics tube according to claim 12, wherein the projections (2a1, 2a2) lie on the principal axis of the elliptical cross-section of the shoulder (2b).

14. A plastics tube according to any one of claims 1 to 12, wherein the internal thread (9) of the screw top (4) and the thread (7) of the externally-threaded neck (2) are of a length such that the internal thread (9) and the thread (7) are forcibly disengaged by the elastic resistance of the material of the shoulder when the frictional force is overcome, as a result of which the screw top (4) can be removed.

15. A plastics tube according to any one of claims 1 to 14, wherein the shoulder (2b) slopes down towards the edge region.

16. A plastics tube according to any one of claims 1 to 15, wherein the externally-threaded neck (2) has a discharge opening (3) for the contents of the tube, a pin (4b) arranged on the base of the cap (4a) engaging in the discharge opening (3).

17. A plastics tube according to one or more of claims 1 to 15, wherein the shoulder (2b) and the end (1') of the tubular body (1) overlap one another in their edge regions.

18. A plastics tube according to claim 17, wherein the edge region of the tubular body (1) engages over the edge region of the externally-threaded neck (2) when seen from the outside.

19. A method of manufacturing a plastics tube according to any one of claims 1 to 18, wherein
a) a tubular preform of the tubular body is manufactured from thermoplastic material by extrusion,
b) a measuring mark and optionally an imprint are then applied to the tubular body,
c) the tubular body is then aligned in a tool by means of the measuring mark and the tubular body is shaped, e.g. widened into a polygon,
d) an externally-threaded neck with a shoulder is manufactured by injection moulding in an injection-moulding unit which rests against the tool or is associated therewith and, during this process,
e) the shoulder and the tubular body are welded together.

20. A method of manufacturing a plastics tube according to any one of claims 1 to 17, wherein
a) a tubular body is manufactured from thermoplastic material with its final cross-sectional shape by extrusion,
b) a measuring mark and optionally an imprint are then applied to the tubular body,
c) the tubular body is then aligned in a tool by means of the measuring mark,
d) an externally-threaded neck with a shoulder is manufactured by injection moulding in an injection-moulding unit which rests against the tool or is associated therewith and, during this process,
e) the shoulder and the tubular body are welded together.

21. A method according to claim 19 or 20, wherein the edge (1') of the tubular body is flanged (22) before the plastics is injected.

## Revendications

1. Tube en matière plastique, comprenant un corps de tube (1) en forme de tuyau souple, qui se transforme via un épaulement (2b) en un goulot à pas de vis extérieur (2), et comprenant un obturateur (4) à vis, susceptible d'être vissé par un pas de vis extérieur (9) sur le pas de vis (7) du goulot à pas de vis extérieur (2), dans lequel l'épaulement (2b) est rapporté par injection à l'extrémité associée (1') du corps de tube (1), et l'épaulement est d'une seule pièce avec le goulot, **caractérisé en ce que** l'épaulement (2b) et l'extrémité adjacente du corps de tube (1) forment un polygone qui se poursuit en un polygone correspondant de la section du corps de tube, et ce qu'au moins deux faces latérales du corps de tube (1) s'étendent, partant de cet emplacement de transition, approximativement à plat, ou avec une surface rectiligne, vers l'extrémité (20) du tube.

2. Tube en matière plastique selon la revendication 1, dans lequel l'épaulement (2b) s'élargit, partant de la zone de pied (2a) du goulot (2) en direction de sa zone de liaison (21) avec le corps de tube (1, 1') sous la forme d'un cône ou d'une partie bombée, la surface intérieure du cône ou la surface intérieure concave de la partie bombée étant tournée vers l'extrémité de remplissage du corps de tube, et la surface extérieure du cône, ou respectivement la surface extérieure convexe de la partie bombée, sert de surface de guidage et d'appui pour le vissage de l'obturateur et pour l'amener dans la position vissée définitive (position finale).

3. Tube en matière plastique selon l'une ou l'autre des reveadications 1 et 2, dans lequel le goulot à pas de vis extérieur (2) se transforme dans sa zone de pied en un épaulement (2b) quadrangulaire, de préférence bombé, auquel se raccorde une zone partielle quadrangulaire du corps de tube (1).

4. Tube en matière plastique selon la revendication 3, dans lequel le bord (5) de l'obturateur à vis (4) glisse en montant sur l'épaulement (2b) du goulot (2) lors du vissage, et en choisissant une matière plastique élastique et flexible pour l'épaulement (2b), l'obturateur (4) atteint en coulissant à la fin de l'opération de vissage une liaison à enclenchement et à encliquetage (2a1, 2a2, 9a, 9b, 9c) avec le goulot (2) une fois avoir dépassé une force de friction qui se produit alors et le cas échéant également une force de déformation du matériau élastique de l'épaulement, en raison de quoi l'obturateur à vis (4) est bloqué dans un appui étanche contre le goulot (2).

5. Tube en matière plastique selon la revendication 4, dans lequel l'obturateur à vis (4) est constitué par un capuchon à section quadrangulaire (4a) et. par une douille (10) qui s'étend en direction longitudinale depuis le fond du capuchon (4a) et dotée d'un pas de vis intérieur (9), et en ce que le goulot (2) présente au niveau de la transition vers l'épaulement (2b) un bourrelet périphérique sur lequel sont agencées de saillies (2a1, 2a2) diamétralement opposées, qui s'engagent, pour la liaison à enclenchement et à encliquetage, dans des évidements diamétralement opposés (9a) ménagés dans la face frontale de la douille (10).

6. Tube en matière plastique selon la revendication 5, dans lequel le pas de vis intérieur (9) est constitué en une matière plastique élastique dans la zone des évidements (9a), et en ce que les saillies (2a1, 2a2) présentent chacune une surface en coin qui coulisse en montant sur la surface intérieure dans la zone des évidements (9a) pour le désencliquetage de la douille (10).

7. Tube en matière plastique selon la revendication 5, dans lequel des talons (9b, 9c) mutuellement diamétralement opposés sont conformés sur la face frontale de la douille (10), et présentent des parties en forme rectangulaire (9b) et en forme de dents de scie (9c) séparées par les évidements (9a).

8. Tube en matière plastique selon la revendication 7, dans lequel la hauteur de la partie en forme rectangulaire (9b) est inférieure à celle de la partie (9c) en forme de dents de scie, grâce à quoi la partie (9c) en forme de dents de scie s'appuie sur l'épaulement (2b) lors de la liaison à encliquetage et à enclenchement.

9. Tube en matière plastique selon l'une ou l'autre des revendications 1 et 2, dans lequel le goulot à pas de vis extérieur (2) se transforme dans la zone de pied en un épaulement (2b) elliptique et de préférence bombé, auquel fait suite un corps de tube (1) réalisé avec une section hexagonale.

10. Tube en matière plastique selon la revendication 9, dans lequel la bordure (5) de l'obturateur à vis (4) glisse sur l'épaulement (2b) du goulot (2) lors du vissage, et en choisissant une matière plastique élastique et flexible pour l'épaulement (2b), l'obturateur (4) atteint en coulissant à la fin de l'opération de vissage un appui étanche contre le goulot (2) une fois avoir dépassé une force de friction qui se produit alors et le cas échéant également une force de déformation du matériau élastique de l'épaulement, et le fait de surmonter cette force de friction sert à assurer cet appui étanche de l'obturateur à vis (4) sur le goulot à pas de vis extérieur (2).

11. Tube en matière plastique selon la revendication 10, dans lequel l'obturateur à vis (4) est constitué par un capuchon ovale (4a) et par une douille (9a) à pas de vis intérieur (9) qui s'étend en direction longitudinale depuis le fond du capuchon (4a), en ce que le pas de vis intérieur (9) présente un chanfrein périphérique (9b) dans la zone frontale, en ce que le goulot (2) comporte un bourrelet périphérique (2a) au niveau de la transition vers l'épaulement (2b), et en ce que le chanfrein (9b) coulisse en montant sur le bourrelet (2a) à la fin de l'opération de vissage.

12. Tube en matière plastique selon la revendication 11, dans lequel la douille (9a) présente une pièce antagoniste (9c) en forme de coin en direction périphérique, et en ce que de saillies (2a1, 2a2) sont agencées diamétralement opposées sur le bourrelet (2a), lesquelles servent de butée pour l'arête de la pièce antagoniste (9c).

13. Tube en matière plastique selon la revendication 12, dans lequel les saillies (2a1, 2a2) sont situées dans le grand axe de la section elliptique de l'épaulement (2b).

14. Tube en matière plastique selon l'une des revendications 1 à 12, dans lequel le pas de vis intérieur (9) de l'obturateur à vis (4) et le pas de vis (7) du goulot (2) sont choisis d'une dimension aussi longue que, du fait de la résistance élastique du matériau de l'épaulement, qui se produit lorsqu'on surmonte la force de friction, le pas de vis intérieur (9) et le pas de vis extérieur (7) parviennent de manière forcée hors d'engagement, grâce à quoi l'obturateur à vis (4) peut être extrait.

15. Tube en matière plastique selon l'une des revendications 1 à 14, dans lequel l'épaulement (2b) est biseauté en direction de la zone de bordure.

16. Tube en matière plastique selon l'une des revendications 1 à 15, dans lequel le goulot (2) comporte une ouverture de sortie (3) pour le contenu du tube, dans laquelle s'engage un tenon (4b) agencé au fond du capuchon (4a).

17. Tube en matière plastique selon l'une ou plusieurs des revendications 1 à 15, dans lequel l'épaulement (2b) et l'extrémité (1') du corps de tube (1) se chevauchent mutuellement dans leur zone de bordure.

18. Tube en matière plastique selon la revendication 17, dans lequel, vue depuis l'extérieur, la zone de bordure du corps de tube (1) engage la zone de bordure du goulot (2) par le dessus.

19. Procédé pour fabriquer un tube en matière plastique selon l'une des revendications 1 à 18, dans lequel :
a) on produit une ébauche de corps de tube en forme de tuyau souple en matière thermoplastique par extrusion,
b) on applique ensuite une marque repère et le cas échéant une impression sur le corps de tube,
c) ensuite, le corps de tube est orienté dans un outillage à l'aide de la marque repère et ledit corps de tube est mis sous la forme d'un polygone, par exemple par élargissement,
d) dans une unité à injection, attenante à l'outillage ou appartenant à l'outillage, on produit un goulot à pas de vis extérieur avec épaulement par injection, et ce faisant
e) l'épaulement et le corps de tube sont soudés l'un à l'autre.

20. Procédé pour la fabrication d'un tube en matière plastique selon l'une des revendications 1 à 17, dans lequel:
a) on produit un corps de tube en forme de tuyau souple en matière thermoplastique à sa forme de section définitive par extrusion,
b) on applique ensuite sur le corps de tube une marque repère et le cas échéant une impression,
c) on oriente ensuite le corps de tube dans un outillage à l'aide de la marque repère,
d) on réalise, dans une unité à injection qui est attenante à l'outillage ou qui appartient à l'outillage, un goulot à pas de vis extérieur avec épaulement, par injection, et ce faisant
e) l'épaulement et le corps de tube sont soudés l'un à l'autre.

21. Procédé selon l'une ou l'autre des revendications 19 et 20, dans lequel la bordure (1') du corps de tube est retroussée (22) avant I'injection de la matière plastique.
